# EUROPEAN PATENT APPLICATION

(11) **EP 2 151 915 A1**
(43) Date of publication of application: **10.02.2010**
(21) Application number: 08763948.0
(22) Date of filing: 29.05.2008
(51) Int. Cl.: H02M 7/48

(54) **POWER CONVERTER**

(30) Priority: 29.05.2007 JP 2007142217
(71) Applicant: Panasonic Corporation, Kadoma-shi Osaka 571-8501 (JP)
(72) Inventor: KAZAMA, Shun, c/o Panasonic Corporation IPROC, Osaka-shi, Osaka 540-6207 (JP)
(74) Representative: Grünecker, Kinkeldey, Stockmair & Schwanhäusser Anwaltssozietät
(86) International application number: PCT/JP2008/001348
(87) International publication number: WO 2008/149523

(57) **Abstract**

A high-side MOSFET (12) is connected in parallel to a high-side MOSFET (11) via an inductor (13). When the flow-out of a current is started, the high-side MOSFET (12) is turned on earlier. A recovery current of a body diode (21a) of the low-side MOSFET (21) flows via the inductor (13) and the high-side MOSFET (12), and therefore, the rate at which the current changes over time can be suppressed to a lower level. Thereafter, the high-side MOSFET (11) for a main current is turned on, and the high-side MOSFET (12) for suppressing a recovery current is turned off, whereby the former causes a current to flow out. When the high-side MOSFET (11) to turned off to stop the flow-out of a current, surge is not caused by the inductor (13).

## Description

### TECHNICAL FIELD

The present invention relates to surge suppressing technology for power converters.

### BACKGROUND ART

As one of power converters, inverters which convert direct current power into alternating current power are known. AC-DC converters, DC-DC converters and the like are also included in power converters.

When an inductive load is driven by a power converter which employs a MOSFET (metal oxide semiconductor field effect transistor) as a switching device, the MOSFET often functions as a freewheeling diode which is realized by a parasitic body diode of the MOSFET in addition to a switching function for driving the load. However, the reverse recovery characteristic of the body diode is generally poor, and therefore, a large recovery current is caused to flow, which induces a surge voltage, or oscillation called ringing. Note that a backward current flowing through the diode during a reverse recovery time is herein referred to as a "recovery current."

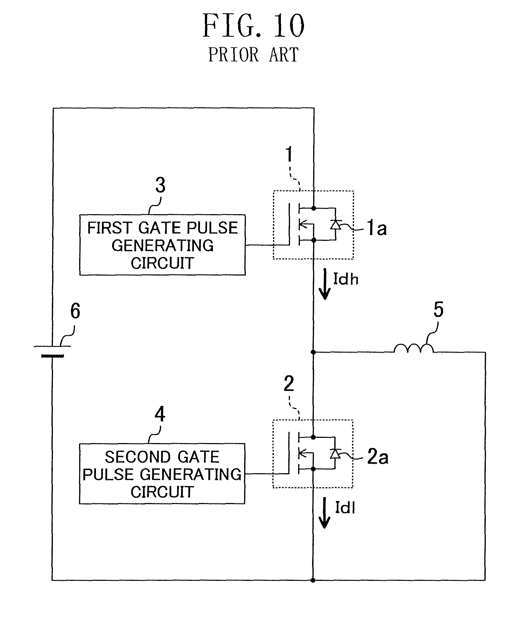

FIG. 10 is a circuit diagram showing a portion of a conventional power converter. In FIG. 10, the conventional power converter includes a high-side MOSFET 1, a low-side MOSFET 2, a high-side body diode 1a, a low-side body diode 2a, a first gate pulse generating circuit 3, and a second gate pulse generating circuit 4, which are configured to convert and supply power of a direct current power supply 6 to an inductive load 5. Here, it is assumed that parasitic body diodes 1a and 2a of the power MOSFETs 1 and 2 are each caused to function as a freewheeling diode. Note that the direction of each arrow accompanied with a reference symbol indicating a current is the positive direction of the current.

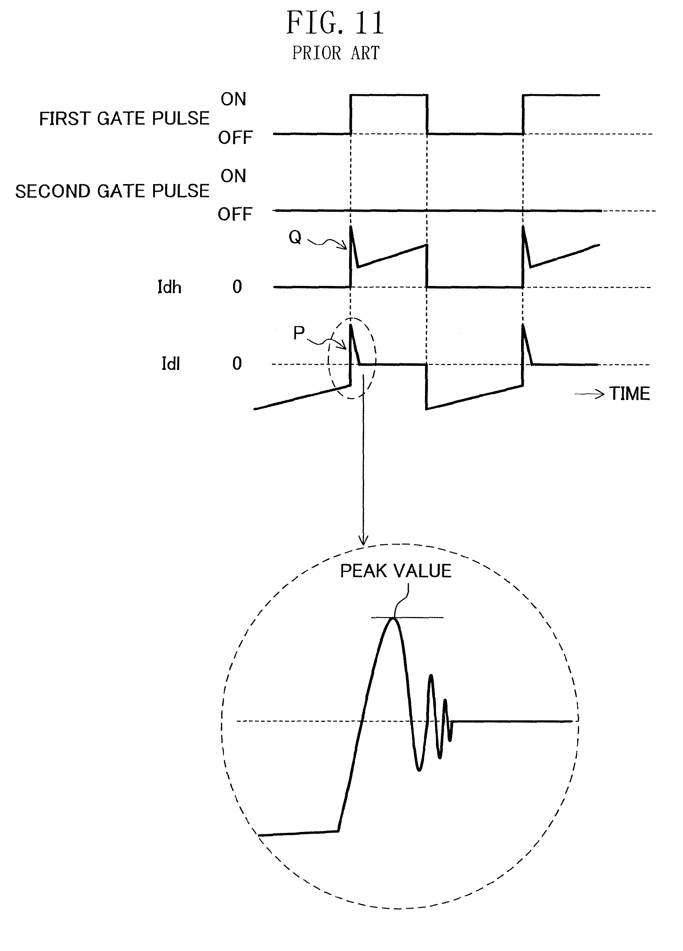

In the configuration of FIG. 10, when the high-side MOSFET 1 is turned on while a current is flowing from the inductive load 5 through the body diode 2a of the low-side MOSFET 2 in the forward direction thereof as shown in, for example, a waveform diagram of FIG. 11, a backward voltage is applied to the body diode 2a, and therefore, a recovery current flows as shown in an enlarged waveform of FIG. 11 before the body diode 2a is turned off. This recovery current is a current which flows until minority carriers occurring in the body diode 2a are eliminated. The magnitude of the recovery current is determined by the physical characteristics of the semiconductor to some extent.

More specifically, when the high-side MOSFET 1 is turned on in accordance with a turn-on command (i.e., a first gate pulse) from the first gate pulse generating circuit 3, a recovery current passing from the high-side MOSFET 1 through the body diode 2a of the low-side MOSFET 2 transiently flows as indicated by reference symbol P in a current Idl. This recovery current does not flow through the inductive load 5, however, is added to a current Idh flowing through the high-side MOSFET 1 as indicated by reference symbol Q, leading to an increase in switching loss, device damage due to over-current, occurrence of noise, or the like.

Therefore, conventionally, in order to reduce the recovery current, a high-breakdown voltage and high-speed recovery diode, a low-breakdown voltage Shottky barrier diode or the like is externally provided antiparallel to a MOSFET. If the high-speed recovery diode is used, a period of time during which the recovery current flows is reduced. The Shottky barrier diode has a structure which makes it difficult for the recovery current to flow.

Alternatively, an inductor may be coupled in series to a MOSFET. For example, in the case of an inverter, by coupling an inductor in series for each phase, the recovery current can be suppressed.

Also, another approach has been proposed in PATENT DOCUMENT 1. Specifically, two or more switching devices are turned on in synchronization with each other, whereby recovery currents corresponding to the freewheeling diodes of the switching devices are caused to simultaneously occur. This is equivalent to increasing the floating inductance per phase. As a result, each recovery current is reduced, and therefore, the peak value of the recovery current of each freewheeling diode can be reduced.

Also, another approach employing an LC resonant circuit has been proposed in PATENT DOCUMENT 2. A main switch is caused to perform ZVS (zero voltage switching) operation using a capacitor, an inductor and a diode and, in addition, an auxiliary switch. As a result, the switching loss and noise of the main switch can be reduced.

### CITATION LIST

### PATENT DOCUMENT

PATENT DOCUMENT 1: Japanese Patent Laid-Open Publication No. 2004-215357
PATENT DOCUMENT 2: Japanese Patent Laid-Open Publication No. H08-298781 1

### SUMMARY OF THE INVENTION

### TECHNICAL PROBLEM

However, the configuration in which an external freewheeling diode is provided antiparallel to a MOSFET requires a sophisticated design technique in which the influence of wiring inductance is sufficiently taken into consideration, and therefore, it is not always easy to cause the freewheeling diode to function sufficiently.

In the configuration in which an inductor is provided in series to a MOSFET, there is an inductance in a line connecting between the MOSFET and a direct current power supply. Therefore, when the current of the MOSFET is turned off, this inductance causes an excessively large surge voltage, which is not preferable.

Also, in the technique of PATENT DOCUMENT 1, although there is not an increase in the number of parts, when two or more switching devices are turned on, the switching devices need to be synchronized with each other at a transient operation level. Therefore, it is complicated to control the switching devices, which is not preferable.

Moreover, in the technique of PATENT DOCUMENT 2, resonant components, such as an inductor, a capacitor and the like, are added, resulting in an increase in the number of parts, which is likely to lead to an increase in cost. Also, the switching device cannot be controlled during resonance, which puts a constraint on the control duty of the system. Also, the switching frequency of the system has to be determined by the constants of the resonant components, which therefore place an upper limit on the switching frequency. Therefore, the increase of the switching frequency is hindered, which is not preferable.

In view of the aforementioned problems with the conventional techniques, an object of the present invention is to reduce the recovery current of a freewheeling diode, whereby a surge voltage and noise are reduced and switching loss is reduced.

### SOLUTION TO THE PROBLEM

To achieve the object, a power converter according to the present invention includes a high-side circuit and a low-side circuit. The high-side and low-side circuits are connected in series to each other. The high-side and low-side circuits each include a first switching device, and a freewheeling diode connected or formed antiparallel between both ends of the first switching device. At least one of the high-side and low-side circuits further includes a serial circuit of a second switching device and an inductor connected between both the ends of the first switching device, a first control circuit configured to control switching of the first switching device, and a second control circuit configured to control switching of the second switching device. The first and second control circuits perform control so that the second switching device is turned on before the first switching device is turned on, and the second switching device is turned off after the first switching device is turned on.

As a result, for example, when the high-side circuit is turned on to cause a current to flow out to a load, if the second switching device of the high-side circuit is turned on earlier, a recovery current of the freewheeling diode of, for example, the low-side circuit flows through a line including the inductor of the high-side circuit and the second switching device of the high-side circuit, and therefore, a change in the recovery current of the freewheeling diode of the low-side circuit is suppressed to a lower level. Thereafter, when the flow-out of the current of the high-side circuit to the load is stopped, if the first switching device of the high-side circuit is turned on before the second switching device of the high-side circuit is turned off, a current is shunted to the first switching device of the high-side circuit, and therefore, a surge voltage due to the inductor does not occur in the current of the second switching device. Moreover, when the first switching device of the high-side circuit is turned off, a current is typically shut off in a path which is connected in a manner which prevents parasitic inductance from occurring to the extent possible, and therefore, an excessively large surge voltage does not occur. Also, as the recovery current of the freewheeling diode of the low-side circuit is reduced, the switching loss in the freewheeling diode itself is reduced, and the switching loss of the second switching device in which the recovery current is added to a current flowing through the high-side circuit is also reduced.

### ADVANTAGES OF THE INVENTION

According to the present invention, the recovery current of the freewheeling diode is reduced, whereby the surge voltage and the noise can be reduced and the switching loss can be reduced.

### BRIEF DESCRIPTION OF THE DRAWINGS

FIG. 1 is a circuit diagram showing an example configuration of a three-phase inverter which is a power converter according to an embodiment of the present invention.
FIG. 2 is a circuit diagram showing a portion of the configuration of FIG. 1.
FIG. 3 is a timing chart showing voltages and currents of parts when a high-side circuit of FIG. 2 drives an inductive load so that a current is caused to flow out from the high-side circuit to the inductive load.
FIG. 4 is a timing chart showing voltages and currents of parts when a low-side circuit of FIG. 2 drives the inductive load so that a current is caused to flow in from the inductive load to the low-side circuit.
FIG. 5A is a diagram showing the result of a circuit simulation indicating that the peak value of a recovery current flowing through a body diode of a low-side MOSFET of FIG. 2 is reduced as compared to the conventional technique.
FIG. 5B is a diagram showing the result of a circuit simulation indicating that a surge voltage occurring between both ends of the low-side MOSFET of FIG. 2 is reduced as compared to the conventional technique.
FIG. 6A is a waveform diagram showing the result of a circuit simulation indicating that the peak value of a recovery current flowing through the body diode of the low-side MOSFET when a MOSFET for a main current is turned on in the high-side circuit of FIG. 2 in accordance with a gate pulse B1 at a predetermined timing.
FIG. 6B is a waveform diagram showing the result of a circuit simulation indicating that the peak value of the recovery current is more reduced than that in the case of FIG. 6A when the timing at which the gate pulse B1 transitions to ON is delayed as compared to the case of FIG. 6A.
FIG. 6C is a waveform diagram showing the result of a circuit simulation indicating that the peak value of the recovery current is more reduced than that in the case of FIG. 6B when the timing at which the gate pulse B1 transitions to ON is delayed as compared to the case of FIG. 6B.
FIG. 6D is a waveform diagram showing the result of a circuit simulation indicating that the peak value of the recovery current is more reduced than that in the case of FIG. 6B when the timing at which the gate pulse B1 transitions to ON is delayed as compared to the case of FIG. 6C.
FIG. 7 is a circuit diagram showing a variation of FIG. 2.
FIG. 8 is a circuit diagram showing another variation of FIG. 2.
FIG. 9 is a circuit diagram showing still another variation of FIG. 2.
FIG. 10 is a circuit diagram showing a portion of a conventional power converter.
FIG. 11 is a timing chart showing voltages and currents of parts when a high-side MOSFET drives an inductive load so that a current is caused to flow out from the high-side MOSFET to the inductive load.

### DESCRIPTION OF EMBODIMENTS

Best mode embodiments of the power converter of the present invention will be described with reference to the accompanying drawings.

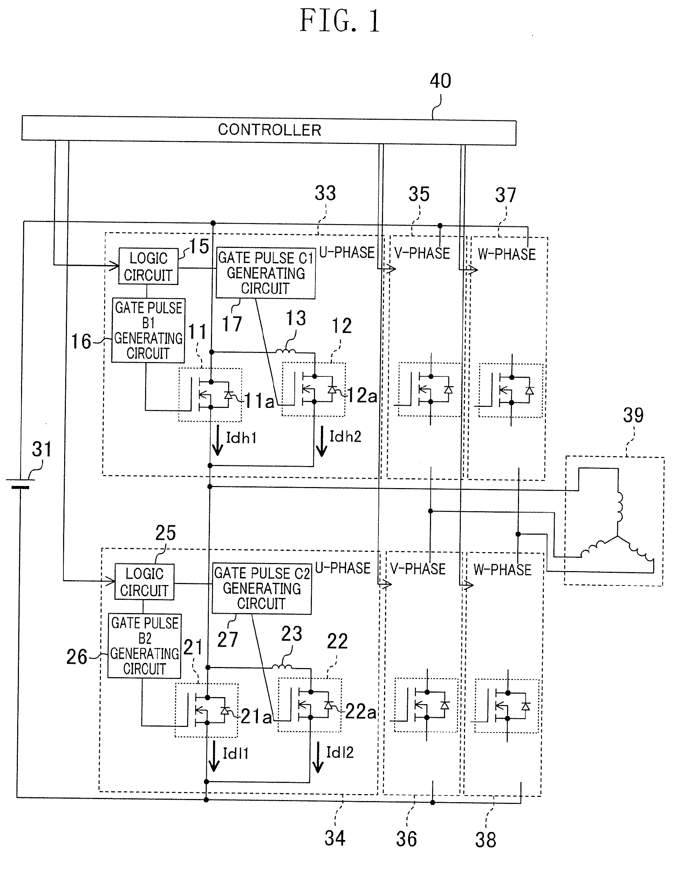

FIG. 1 is a circuit diagram showing an example configuration of a three-phase inverter which is a power converter according to an embodiment of the present invention. The three-phase inverter includes a total of six circuits having similar circuit configurations, i.e., a U-phase high-side circuit 33, a U-phase low-side circuit 34, a V-phase high-side circuit 35, a V-phase low-side circuit 36, a W-phase high-side circuit 37, and a W-phase low-side circuit 38. The three-phase inverter drives a three-phase alternating current motor 39 based on direct current power supplied from a direct current power supply 31. A controller 40 inputs control commands to respective logic circuits 15 and 25 of each of the circuits 33 to 38.

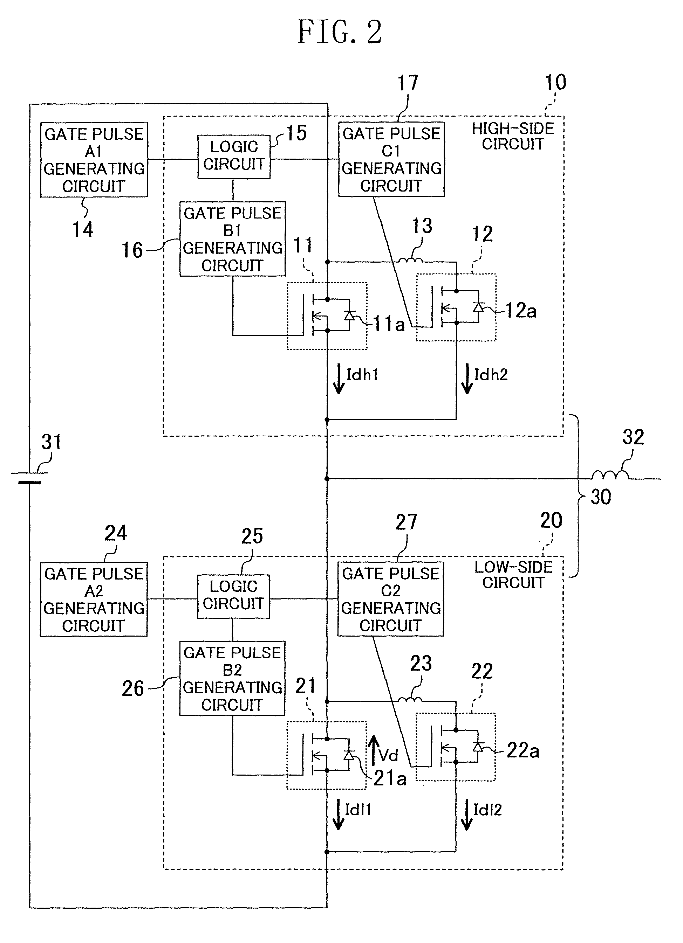

FIG. 2 is a circuit diagram showing a portion of the configuration of FIG. 1. In FIG. 2, a configuration is provided which is connected in series to the direct current power supply 31 and is used to supply power to an inductive load 32. This configuration includes a MOSFET 11 which is a first switching device of a high-side circuit 10, a MOSFET 21 which is a first switching device of a low-side circuit 20, and body diodes 11a and 21a formed antiparallel to the MOSFETs 11 and 21, respectively. In the configuration, a drain terminal of the MOSFET 11 which is the first switching device of the high-side circuit 10 is connected to one end of an inductor 13, the other end of the inductor 13 is connected to a drain terminal of a MOSFET 12 which is a second switching device of the high-side circuit 10, and a source terminal of the MOSFET 12 which is the second switching device of the high-side circuit 10 is connected to a source terminal of the MOSFET 11 which is the first switching device of the high-side circuit 10. Reference symbol 12a indicates a body diode of the MOSFET 12 which is the second switching device.

A gate drive circuit which drives the switching devices includes a gate pulse B1 generating circuit 16 which drives the MOSFET 11 which is the first switching device of the high-side circuit 10, a gate pulse C1 generating circuit 17 which drives the MOSFET 12 which is the second switching device of the high-side circuit 10, and a logic circuit 15 which receives a gate pulse A1 (system control command) from a gate pulse A1 generating circuit 14, and outputs a pulse command to each of the gate pulse B1 generating circuit 16 and the gate pulse C1 generating circuit 17.

In the low-side circuit 20, as in the high-side circuit 10, a drain terminal of the MOSFET 21 which is the first switching device of the low-side circuit 20 is connected to one end of an inductor 23, the other end of the inductor 23 is connected to a drain terminal of a MOSFET 22 which is a second switching device of the low-side circuit 20, and a source terminal of the MOSFET 22 which is the second switching device of the low-side circuit 20 is connected to a source terminal of the MOSFET 21 which is the first switching device of the low-side circuit 20. Reference symbol 22a indicates a body diode of the MOSFET 22 which is the second switching device.

A gate drive circuit which drives the switching devices includes a gate pulse B2 generating circuit 26 which drives the MOSFET 21 which is the first switching device of the low-side circuit 20, a gate pulse C2 generating circuit 27 which drives the MOSFET 22 which is the second switching device of the low-side circuit 20, and a logic circuit 25 which receives a gate pulse A2 (system control command) from a gate pulse A2 generating circuit 24, and outputs a pulse command to each of the gate pulse B2 generating circuit 26 and the gate pulse C2 generating circuit 27.

Also, for example, the high-side circuit 10 and the low-side circuit 20 may be paired as a high-side and low-side circuit 30, which may be formed as a package called an IPM (intelligent power module) in which a power device, a gate drive circuit and a logic circuit are incorporated. Note that the present invention is not limited to this. The high-side circuit 10 and the low-side circuit 20 may be formed as separate packages. There can be various other combinations of components to be packaged.

A configuration of a power converter according to one embodiment of the present invention has been heretofore described. The MOSFETs 12 and 22 are provided so as to suppress the recovery currents. The MOSFET 12 is connected via the inductor 13 to the MOSFET 11 for a main current, and the MOSFET 22 is connected via the inductor 23 to the MOSFET 21 for a main current. Note that a serial circuit of the high-side circuit 10 and the low-side circuit 20 of FIG. 2 is not limited to an inverter, and can be used as a basic circuit for power converters in various forms, such as an AC-DC converter, a DC-DC converter and the like.

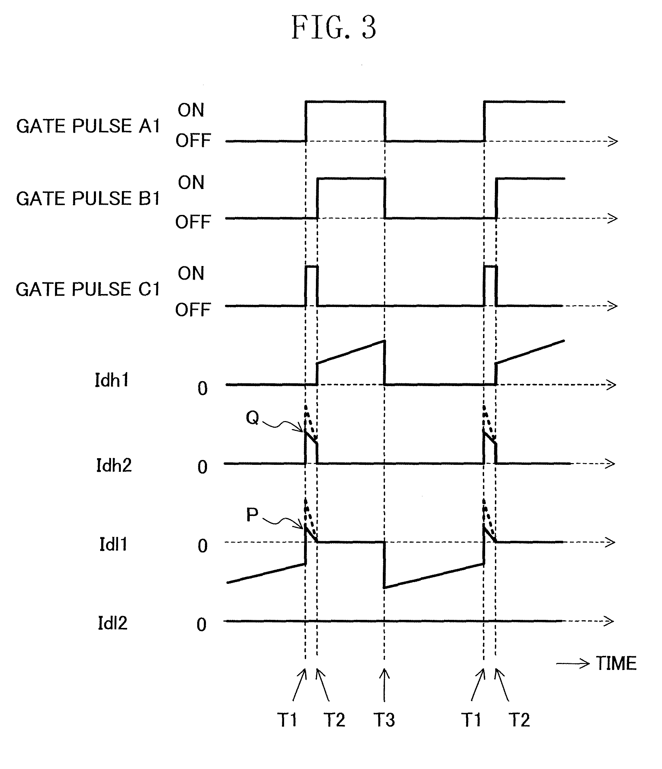

FIG. 3 is a timing chart showing voltages and currents of parts when the MOSFET 11 of FIG. 2 which is the first switching device of the high-side circuit 10 is driven, i.e., when a current is caused to flow out to the inductive load 32. The logic circuit 15 outputs a predetermined pulse command in accordance with a gate pulse A1 received from the gate pulse A1 generating circuit 14, thereby causing the gate pulse B1 generating circuit 16 and the gate pulse C1 generating circuit 17 to output a gate pulse B1 and a gate pulse C1, respectively.

Here, the gate pulse A1 is a system control command pulse corresponding to a period of time during which a current is caused to flow out to the inductive load 32. The gate pulse C1 transitions to ON in synchronization with the rising of the gate pulse A1, and causes the high-side MOSFET 12 to be in the on-state only during a period of time that a recovery current of the body diode 21a flows. The gate pulse B1 is a pulse which follows the gate pulse C1, and causes the high-side MOSFET 11 to be in the on-state until the falling of the gate pulse A1. The gate pulse C1 and the gate pulse B1 overlap each other.

During a period of time until time T1 of FIG. 3, the high-side MOSFETs 11 and 12 and the low-side MOSFETs 21 and 22 are all in the off-state, and therefore, a current Idl1 flows through the body diode 21a of the low-side MOSFET 21 in the forward direction thereof. On the other hand, as the inductor 23 is coupled in series to the body diode 22a of the low-side MOSFET 22, a current does not flow through the body diode 22a.

Next, at time T1 of FIG. 3, the gate pulse A1 rises in accordance with a system control command so as to cause a current to flow out to the inductive load 32, and at the same time, the gate pulse C1 rises, which turns on the high-side MOSFET 12. Therefore, the flow-out of a current to the inductive load 32 is started, and a recovery current flows through the body diode 21 a of the low-side MOSFET 21 as indicated by reference symbol P in the current Idl1. This current is added to a current Idh2 flowing through the high-side MOSFET 12 as indicated by reference symbol Q. However, as the inductor 13 is provided in this current path, a change in the recovery current of the body diode 21a of the low-side MOSFET 21 is mild. In other words, the rate at which the current changes over time (di/dt) is small, and therefore, the peak value of the recovery current of the body diode 21a of the low-side MOSFET 21 is suppressed to a lower level, and moreover, a surge voltage and noise caused by the recovery current of the body diode 21a of the low-side MOSFET 21 are also suppressed to lower levels. In other words, as compared to, for example, a recovery current waveform indicated by a dashed line in FIG. 3 in the absence of the action of the inductor 13, the recovery current is significantly reduced.

Thereafter, at time T2 of FIG. 3 after a predetermined recovery period of the body diode 21a of the low-side MOSFET 21 has passed, the gate pulse B1 rises, which turns on the high-side MOSFET 11 for a main current, and the tumed-on high-side MOSFET 11 causes a current to flow out to the inductive load 32. On the other hand, the gate pulse C1 falls, which turns off the high-side MOSFET 12 for suppressing a recovery current.

At time T3 of FIG. 3, the gate pulse A1 falls in accordance with a system control command, and at the same time, the gate pulse B1 falls, which turns off the high-side MOSFET 11. A surge voltage which occurs when the high-side MOSFET 11 is turned off is suppressed to a lower value, as a current is shut off in a path which does not pass through the inductor 13, i.e., a path which is connected in a manner which prevents parasitic inductance from occurring to the extent possible.

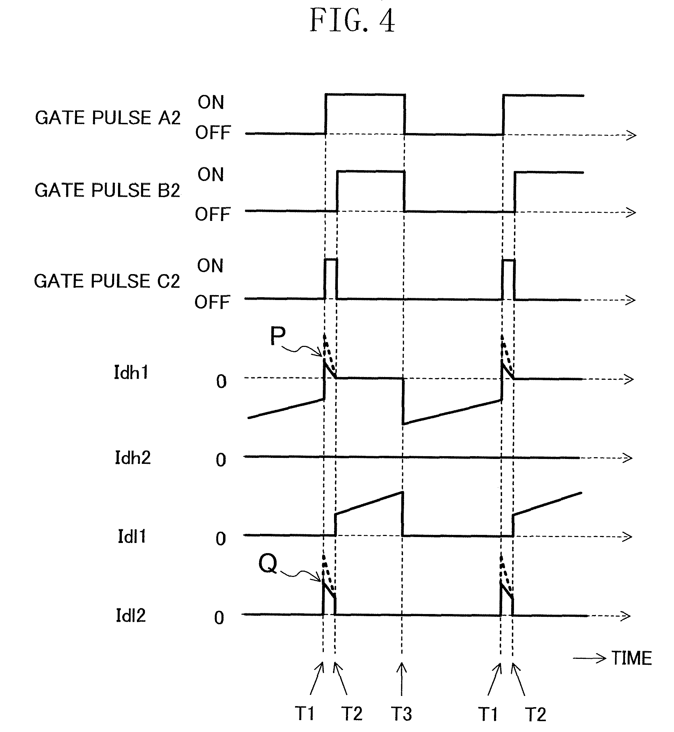

FIG. 4 is a timing chart showing voltages and currents of parts when the MOSFET 21 which is the first switching device of the low-side circuit 20 of FIG. 2 is driven, i.e., when a current is caused to flow in from the inductive load 32. The logic circuit 25 outputs a predetermined pulse command in accordance with a gate pulse A2 received from the gate pulse A2 generating circuit 24, and causes the gate pulse B2 generating circuit 26 and the gate pulse C2 generating circuit 27 to output a gate pulse B2 and a gate pulse C2, respectively.

Here, the gate pulse A2 is a system command pulse corresponding to a period of time during which a current is caused to flow in from the inductive load 32. The gate pulse C2 is a pulse which transitions to ON in synchronization with the rising of the gate pulse A2, and causes the low-side MOSFET 22 to be in the on-state only during a period of time that a recovery current of the body diode 11 a flows. The gate pulse B2 is a pulse which follows the gate pulse C2, and causes the low-side MOSFET 21 to be in the on-state during a period of time until the falling of the gate pulse A2. The gate pulse C2 and the gate pulse B2 overlap each other.

During a period of time until time T1 of FIG. 4, the high-side MOSFETs 11 and 12 and the low-side MOSFETs 21 and 22 are all in the off-state, and a current Idh1 flows through the body diode 11a of the high-side MOSFET 11 in the forward direction thereof. On the other hand, as the inductor 13 is coupled in series to the body diode 12a of the high-side MOSFET 12, a current does not flow through the body diode 12a.

Next, at time T1 of FIG. 4, the gate pulse A2 rises in accordance with a system control command so as to cause a current to flow in from the inductive load 32, and at the same time, the gate pulse C2 rises, which turns on the low-side MOSFET 22. Therefore, the flow-in of a current from the inductive load 32 is started, and a recovery current flows through the body diode 11 a of the high-side MOSFET 11 as indicated by reference symbol P in the current Idh1. This current is added to a current Idl2 flowing through the low-side MOSFET 22 as indicated by reference symbol Q. However, as the inductor 23 is provided in this current path, a change in the recovery current of the body diode 11a of the high-side MOSFET 11 is mild. In other words, the rate at which the current changes over time (di/dt) is small, and therefore, the peak value of the recovery current of the body diode 11a of the high-side MOSFET 11 is suppressed to a lower level, and moreover, a surge voltage and noise caused by the recovery current of the body diode 11a of the high-side MOSFET 11 are also suppressed to lower levels. In other words, as compared to, for example, a recovery current waveform indicated by a dashed line in FIG. 4 in the absence of the action of the inductor 23, the recovery current is significantly reduced.

Thereafter, at time T2 of FIG. 4 after a predetermined recovery period of the body diode 11a of the high-side MOSFET 11 has passed, the gate pulse B2 rises, which turns on the low-side MOSFET 21 for a main current, and the turned-on low-side MOSFET 21 causes a current to flow in from the inductive load 32. On the other hand, the gate pulse C2 falls, which turns off the low-side MOSFET 22 for suppressing a recovery current.

At time T3 of FIG. 4, the gate pulse A2 falls in accordance with a system control command, and at the same time, the gate pulse B2 falls, which turns off the low-side MOSFET 21. A surge voltage which occurs when the low-side MOSFET 21 is turned off is suppressed to a lower value, as a current is shut off in a path which does not pass through the inductor 23, i.e., a path which is connected in a manner which prevents parasitic inductance from occurring to the extent possible.

As described above, for example, during a period of time from time T1 to time T2 of FIG. 3, when the high-side MOSFET 12 is temporarily turned on to cause a current to flow out, the recovery current of the body diode 21a of the low-side MOSFET 21 can be easily suppressed to a lower level by the action of the inductor 13 connected in series to the high-side MOSFET 12. Therefore, a surge voltage can be easily reduced, the high-side MOSFETs 11 and 12 can be easily prevented from being damaged, currents flowing through the high-side MOSFETs 11 and 12 and the body diode 21a can be easily decreased to reduce switching loss, and the like.

On the other hand, the current path in which the inductor 13 is provided is not a current path through which a main current does not flow when the high-side MOSFET 11 is turned on. Therefore, a surge voltage which occurs when the high-side MOSFET 11 is turned off at, for example, time T3 of FIG. 3 is not increased.

Also, at time T2 of FIG. 3, when the MOSFET 12 for suppressing a recovery current is turned off, a surge voltage may occur due to the inductor 13. However, the MOSFET 11 for a main current is turned on, and therefore, a certain amount of current which would otherwise flow through the MOSFET 12 for suppressing a recovery current flows through the MOSFET 11 for a main current. As a result, the current value of the MOSFET 12 for suppressing a recovery current is lowered, and therefore, the surge voltage due to the inductor 13 is suppressed to a relatively low value and typically does not have a significant influence.

Also, when the logic circuit 15, the gate pulse B1 generating circuit 16, the gate pulse C1 generating circuit 17 and the like are incorporated into a single package, the influence of the recovery current can be easily suppressed only by inputting the gate pulse A1 as is similar to when a power converter which does not have the high-side MOSFET 12, the inductor 13 or the like is used.

Note that the effect of suppressing the influence of the recovery current is also similarly achieved when the logic circuit 15 and the like are not incorporated and the gate pulse B1 and the gate pulse C1 are externally supplied or when the gate pulse A1 generating circuit 14 is incorporated.

Also, the recovery current of a freewheeling diode flows during a short period of time, such as 1 µs or less, and therefore, the addition of the high-side MOSFET 12 and the inductor 13, and the low-side MOSFET 22 and the inductor 23 does not hinder the controllability of the system or the increase of the switching frequency.

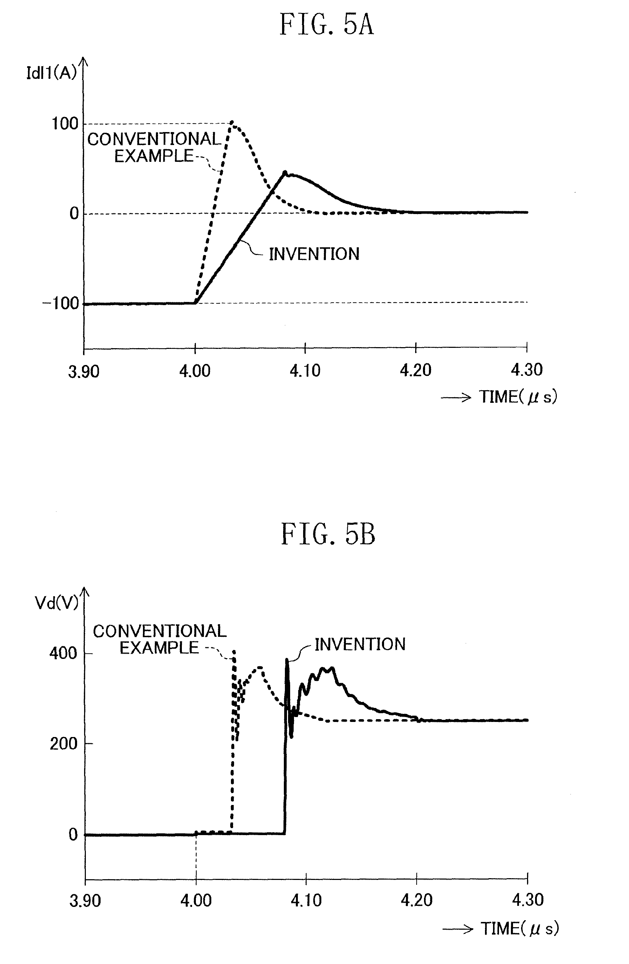

FIG. 5A is a diagram showing the result of a circuit simulation indicating that the peak value of the recovery current flowing through the body diode 21a of the low-side MOSFET 21 of FIG. 2 is reduced as compared to the conventional technique. In this simulation, it is assumed that the inductor 13 of FIG. 2 has an inductance of 100 nH. When the high-side MOSFETs 11 and 12 and the low-side MOSFETs 21 and 22 are all in the off-state, a forward current of 100 A flows through the body diode 21a of the low-side MOSFET 21. The current of 100 A corresponds to the current Idl1 which flows during a period of time until time T1 of FIG. 3. As a result, the peak value of the recovery current flowing through the body diode 21a of the low-side MOSFET 21 is suppressed to 40 A, as compared to 100 A in the conventional technique.

FIG. 5B is a diagram showing the result of a circuit simulation indicating that a surge voltage Vd occurring between both ends of the low-side MOSFET 21 of FIG. 2 is reduced as compared to the conventional technique. In this simulation, the direct current power supply 31 is assumed to supply a power supply voltage of 250 V. As a result, the surge voltage Vd caused by the recovery current of the body diode 21a of the low-side MOSFET 21 can be suppressed to 370 V, as compared to 400 V in the conventional technique. Therefore, noise caused by the surge voltage can also be suppressed to a lower level.

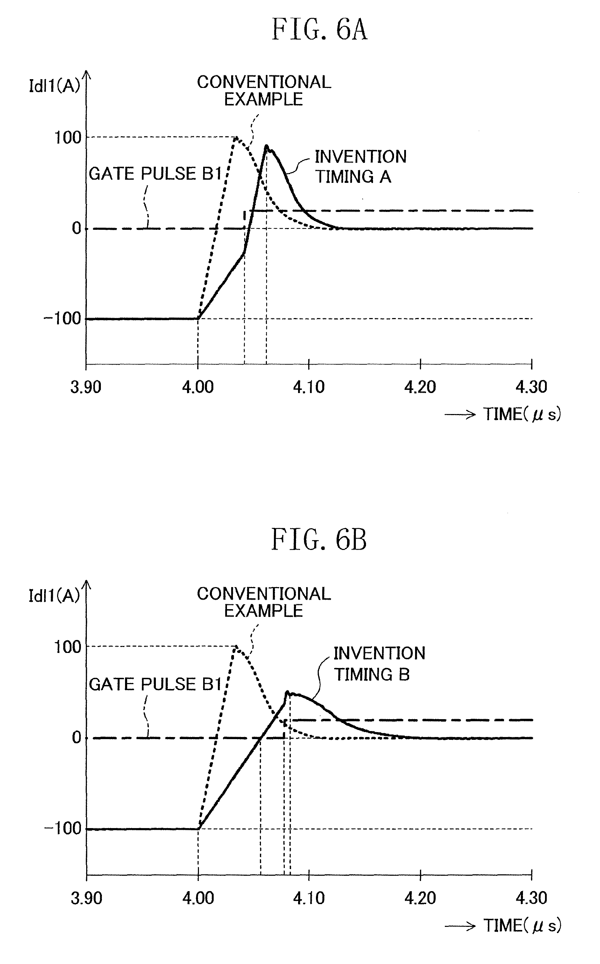

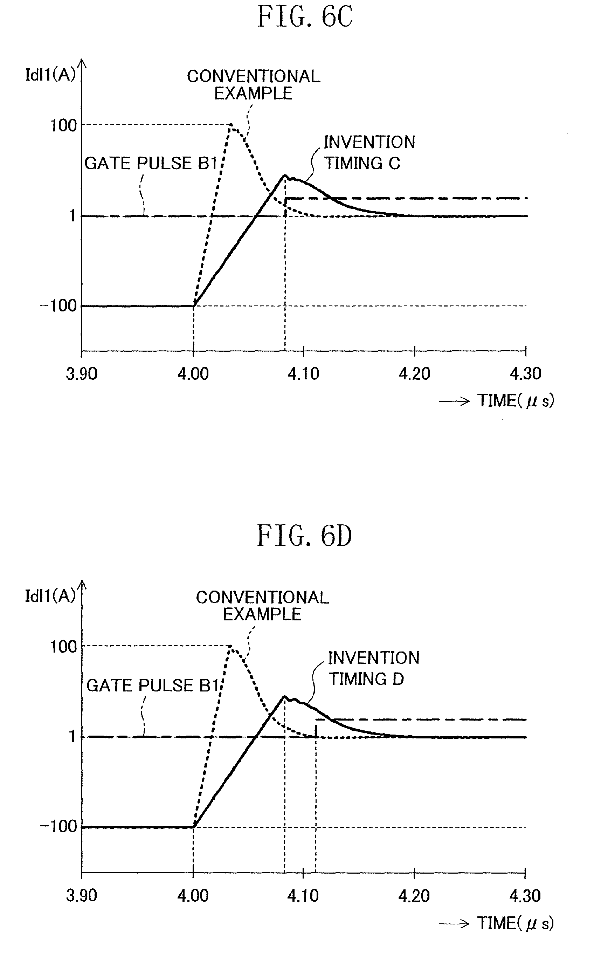

FIGS. 6A to 6D are diagrams showing the results of circuit simulations indicating that, in the high-side circuit 10 of FIG. 2, when the MOSFET 11 for a main current is turned on in accordance with gate pulses B1 having different timings, the peak value of the recovery current flowing through the body diode 21a of the low-side MOSFET 21 is reduced as compared to the conventional technique in all the cases. Timing A of FIG. 6A indicates a case where the gate pulse B1 transitions to ON, which turns on the MOSFET 11 of FIG. 2, at a timing when the polarity of the current Idl1 flowing through the body diode 21a is reversed. Timing B of FIG. 6B indicates a case where the gate pulse B1 transitions to ON, which turns on the MOSFET 11 of FIG. 2, at a timing immediately before the recovery current of the body diode 21a reaches the maximum value. Timing C of FIG. 6C indicates a case where the gate pulse B1 transitions to ON, which turns on the MOSFET 11 of FIG. 2, at a timing when the recovery current of the body diode 21a reaches the maximum value. Timing D of FIG. 6D indicates a case where the gate pulse B1 transitions to ON, which turns on the MOSFET 11 of FIG. 2, at a timing after the recovery current of the body diode 21a reaches the maximum value.

As can be seen from the results of FIGS. 6C and 6D, it is preferable that the gate pulse B1 rise at the time or after the recovery current of the body diode 21a reaches the maximum value. Also, as can be seen from the results of FIGS. 6A and 6B, even when the gate pulse B1 rises at the time or after the current of the body diode 21 a is reversed, the peak value of the recovery current is reduced.

Note that the inductors 13 and 23 are not limited to devices which are explicitly provided, or alternatively may be in the form of a wiring pattern, floating inductance or the like as long as inductance which is required to achieve a sufficiently mild change in the recovery current is obtained.

Also, the present invention is not limited to a combination of a MOSFET and a body diode of the MOSFET. Alternatively, even when an IGBT (insulated gate bipolar transistor) as a switching device and an external freewheeling diode are provided, the effect of suppressing a recovery current is obtained by the same mechanism.

Also, the present invention is not limited to a MOSFET, and the aforementioned configuration may be applied to power converters employing various switching devices. Specifically, the present invention may be applied to, for example, a configuration in which an external freewheeling diode is provided to a bipolar transistor.

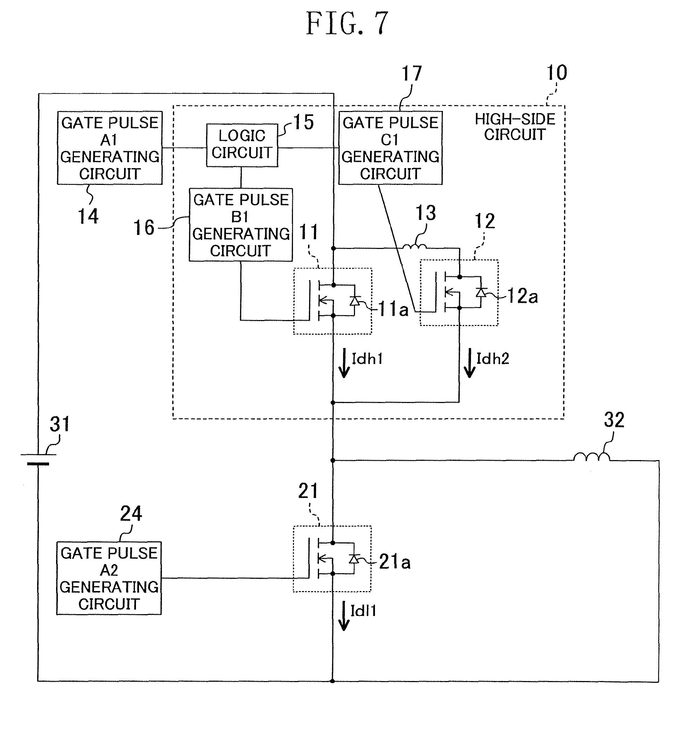

Next, a variation of the configuration of FIG. 2 will be described. Not all of the high-side MOSFET 12 and the inductor 13, and the low-side MOSFET 22 and the inductor 23 need to be provided. As shown in FIG. 7, in principle, only the high-side MOSFET 12 and the inductor 13 may be provided so as to suppress the recovery current of the body diode 21a of the low-side MOSFET 21.

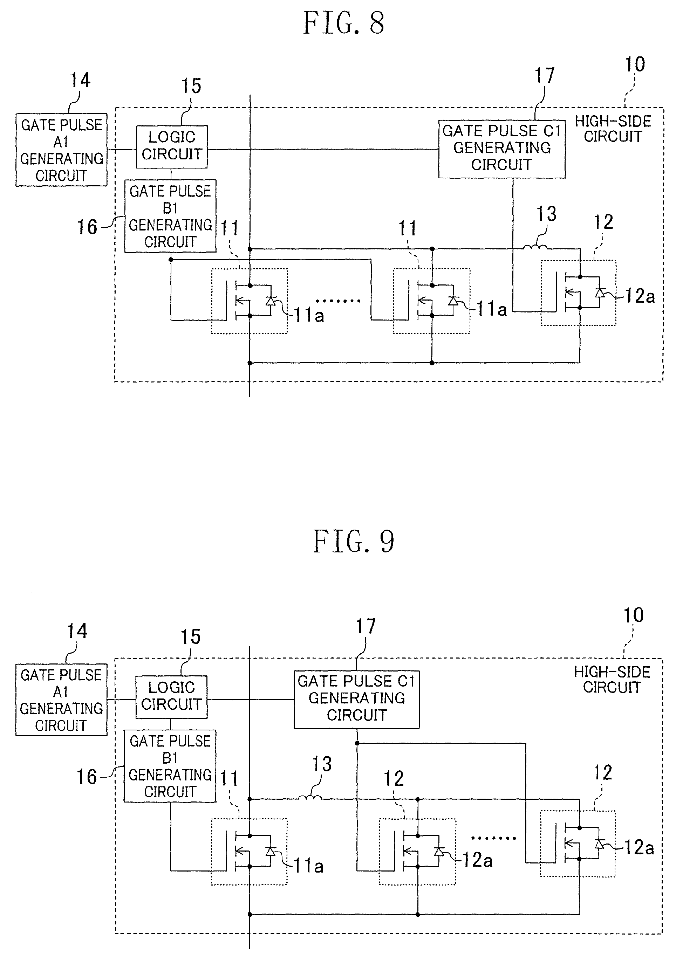

Also, as shown in FIG. 8, a plurality of MOSFETs 11 for a main current may be provided in parallel to allow a large current to flow in and out. With such a configuration, the capacity of the system can be increased. Also, by the parallel connection of the MOSFETs, a flowing current per device can be reduced, resulting in the effect of suppressing a surge voltage and a surge current.

Also, as shown in FIG. 9, a plurality of MOSFETs 12 for suppressing a recovery current may be provided in parallel to allow a large current to flow in and out. By the parallel connection of the MOSFETs, a flowing current per device can be reduced, whereby a surge voltage and a surge current can be suppressed.

Also, the recovery current of a freewheeling diode is smaller than a main current and flows during a shorter period of time than that of the main current. Therefore, the MOSFET 12 for suppressing the recovery current may have a smaller current-carrying capacity than that of the MOSFET 11 for the main current. By employing the MOSFET 12 having a smaller current-carrying capacity, it is possible to prevent an increase in cost and system size due to an increase in the number of parts.

Also, a certain amount of current which would otherwise flow through the high-side MOSFET 12 for suppressing a recovery current flows through the high-side MOSFET 11 for a main current at, for example, timing T2 in FIG. 3. However, if the on-state resistance of the high-side MOSFET 12 for suppressing a recovery current is higher than the on-state resistance of the high-side MOSFET 11 for a main current, the shunting is more easily performed, and therefore, a surge voltage which occurs when the high-side MOSFET 12 for suppressing a recovery current is turned off can be suppressed to a lower level.

Also, the switching device (e.g., an IGBT, a MOSFET, etc.) and the diode may be changed from the Si (silicon) devices to wide band gap devices, such as a SiC (silicon carbide) device, a GaN (gallium nitride) device and the like. In this case, the loss can be significantly reduced, and therefore, a cooling device and a heat radiating fin are not required for the power converter. Also, these wide band gap devices have a higher heat resistance property than that of Si devices, and therefore, an improvement in the flexibility of device layout can be expected. The reduction in the size of the cooling device and the improvement in the heat resistance property of the device itself enable the wide band gap device to be provided immediately close to, for example, the direct current power supply 31 and the inductors 13 and 23 in FIG. 2, whereby the inductance of wiring can be significantly reduced. Also, a higher switching speed can be achieved and the occurrence of an excessively large surge voltage due to an influence of the wiring inductance can be suppressed.

### INDUSTRIAL APPLICABILITY

The power converter of the present invention has the effect of easily reducing the recovery current of a freewheeling diode, and is useful as a power converter, such as an inverter, an AC-DC converter, a DC-DC converter or the like.

### DESCRIPTION OF REFERENCE CHARACTERS

- 10: High-side Circuit
- 11: High-side MOSFET
- 11a: Body Diode
- 12: High-side MOSFET
- 12a: Body Diode
- 13: Inductor
- 14: Gate Pulse A1 Generating Circuit
- 15: Logic Circuit
- 16: Gate Pulse B1 Generating Circuit
- 17: Gate Pulse C1 Generating Circuit
- 20: Low-side Circuit
- 21: Low-side MOSFET
- 21a: Body Diode
- 22: Low-side MOSFET
- 22a: Body Diode
- 23: Inductor
- 24: Gate Pulse A2 Generating Circuit
- 25: Logic Circuit
- 26: Gate Pulse B2 Generating Circuit
- 27: Gate Pulse C2 Generating Circuit
- 30: High-side and Low-side Circuit
- 31: Direct Current Power Supply
- 32: Inductive Load
- 33: U-phase High-Side Circuit
- 34: U-phase Low-side Circuit
- 35: V-phase High-side Circuit
- 36: V-phase Low-side Circuit
- 37: W-phase High-side Circuit
- 38: W-phase Low-side Circuit
- 39: Three-phase Alternating Current Motor
- 40: Controller

- A1, B1, C1: Gate Pulse
- A2, B2, C2: Gate Pulse

## Claims

1. A power converter comprising:
a high-side circuit; and
a low-side circuit,
wherein
the high-side and low-side circuits are connected in series to each other,
the high-side and low-side circuits each include a first switching device, and a freewheeling diode connected or formed antiparallel between both ends of the first switching device,
at least one of the high-side and low-side circuits further includes a serial circuit of a second switching device and an inductor connected between both the ends of the first switching device, a first control circuit configured to control switching of the first switching device, and a second control circuit configured to control switching of the second switching device, and
the first and second control circuits perform control so that the second switching device is turned on before the first switching device is turned on, and the second switching device is turned off after the first switching device is turned on.

2. The power converter of claim 1, wherein
the first control circuit performs control so that the first switching device is turned on at the time or after a recovery current caused by a reverse recovery characteristic of the freewheeling diode reaches a maximum value.

3. The power converter of claim 1, wherein
the second switching device has a current-carrying capacity smaller than that of the first switching device.

4. The power converter of claim 1, wherein
the second switching device has an on-state resistance higher than that of the first switching device.

5. The power converter of claim 1, wherein
at least one of the first and second switching devices has a plurality of switching devices connected in parallel to each other.

6. The power converter of claim 1, wherein
the high-side and low-side circuits are each provided in a separate package.

7. The power converter of claim 1, wherein
the high-side and low-side circuits are both provided in a single package.

8. The power converter of claim 1, wherein
the first switching device is a MOSFET and the freewheeling diode is a body diode of the MOSFET.

9. The power converter of claim 1, wherein
the first and second switching devices are each made of a wide band gap semiconductor including SiC or GaN.
